# EUROPÄISCHE PATENTSCHRIFT

(11) **EP 3 740 826 B1**
(45) Veröffentlichungstag und Bekanntmachung des Hinweises auf die Patenterteilung: **24.07.2024**
(21) Anmeldenummer: 18829398.9
(22) Anmeldetag: 21.12.2018
(51) Int. Cl.: G05B 19/042, G05B 9/02

(54) **STEUERUNG EINES IM AUSSENBEREICH ANGEORDNETEN HAUSGERÄTS**
CONTROLLING A DOMESTIC APPLIANCE ARRANGED IN AN OUTSIDE AREA
COMMANDE D'UN APPAREIL MÉNAGER DISPOSÉ À L'AIR LIBRE

(30) Priorität: 17.01.2018 DE 102018200720
(43) Veröffentlichungstag der Anmeldung: 25.11.2020
(73) Patentinhaber: BSH Hausgeräte GmbH, 81739 München (DE)
(72) Erfinder: HEIDEL, Andreas, 89438 Holzheim (DE); WAGNER, Sebastian, 89353 Glött (DE); KRÄNZLE, Bernd, 89561 Dischingen (DE)
(86) Internationale Anmeldenummer: PCT/EP2018/086564
(87) Internationale Veröffentlichungsnummer: WO 2019/141496

(56) Entgegenhaltungen:
- EP-A1- 2 481 842
- EP-A2- 2 474 790
- DE-U1- 202016 004 387
- US-A1- 2006 056 126
- US-B1- 8 988 232
- VAILLANT GMBH: "Betriebsanleitung aroTHERM VWL ../2 A 230 V; VWL ../2 A 400 V", 20 November 2015 (2015-11-20), pages 1 - 24, XP055926537, Retrieved from the Internet <URL:https://www.vaillant.de/documents/download/194470> [retrieved on 20220531]
- VAILLANT GMBH ET AL: "Betriebsanleitung calorMATIC 470 Witterungsgeführter Regler", 22 June 2017 (2017-06-22), pages 1 - 28, XP055575114, Retrieved from the Internet <URL:https://www.vaillant.de/documents/download/280025> [retrieved on 20190327]

## Beschreibung

Die Erfindung betrifft die Steuerung eines Hausgeräts. Insbesondere betrifft die Erfindung die Deaktivierung eines Hausgeräts unter vorbestimmten Bedingungen.

Ein Hausgerät ist dazu eingerichtet, eine haushaltsbezogene Funktion durchzuführen, beispielsweise Wärmen, Kühlen, Ventilieren oder Reinigen. Gewöhnlich ist das Hausgerät derart aufgebaut, dass es unter allen zu erwartenden Bedingungen, die in einem Haushalt auftreten, gefahrlos betrieben werden kann. Trotzdem kann es zu einer Konstellation von Umgebungsparametern kommen, in der die Gefahr besteht, dass durch den Betrieb des Hausgeräts entweder das Hausgerät selbst, ein anderes Gerät in diesem Bereich oder eine Person im Bereich des Hausgeräts Schaden nimmt. Beispielsweise kann das Hausgerät außerhalb eines umbauten Raums aufgestellt sein, etwa auf einem Balkon oder einer Terrasse. Sollte das Hausgerät betrieben werden, während ein Gewitter in diesem Bereich niedergeht, so kann ein elektrischer Fehlerstrom oder ein Kurzschluss entstehen.

CN102540918A schlägt einen Schalter vor, der über Signale eines Telefonsystems gesteuert werden kann, um ein Gerät im Fall von drohendem Blitzschlag abzuschalten.

Aus dem Bereich des Heizungsbaus sind verwandte Technologien bekannt. Beispielsweise beschreibt die Firma Vaillant GmbH in ihrer Betriebsanleitung zum calorMATIC 470 vom 22. Juni 2017 einen witterungsgeführten Regler zur Steuerung einer Heizung. Eine ähnliche Offenbarung findet sich in der Betriebsanleitung "aroTHERM", die von der Vaillant GmbH am 20. November 2015 veröffentlicht wurde. Die DE 20 2016 004 387 U1 wiederum offenbart ein Gerät, welches ein Signal eines Blitzdetektors bewertet und entsprechend reagiert.

Eine der Erfindung zu Grunde liegende Aufgabe besteht darin, eine Technik anzugeben, die einen verbesserten Schutz vor Gefährdung durch Betreiben eines Hausgeräts bereitstellt. Die Erfindung löst diese Aufgabe mittels der Gegenstände der unabhängigen Ansprüche. Unteransprüche geben bevorzugte Ausführungsformen wieder.

Ein Verfahren zum Steuern eines elektrischen Hausgeräts umfasst Schritte des Bestimmens eines Umgebungsparameters im Bereich des Hausgeräts auf der Basis einer meteorologischen Lage in diesem Bereich; des Vergleichens des Umgebungsparameters mit einem vorbestimmten Schwellenwert; und des Deaktivierens des Hausgeräts, falls der Umgebungsparameter den Schwellenwert in einer vorbestimmten Richtung überschreitet.

Eine Betriebs- oder Funktionssicherheit des Hausgeräts kann so mit Rücksicht auf ein wetterverbundenes Phänomen verbessert sichergestellt werden. Eine Gefahr, die durch den Betrieb oder die Aktivierung des Hausgeräts auf das Hausgerät selbst, auf ein anderes Gerät, einen anderen Gegenstand oder eine Person ausgeht, kann minimiert werden. Die meteorologische Lage umfasst Wetterinformationen, z.B. aktuelle, historische oder vorhergesagte Wetterinformationen, und ist bevorzugt auf eine geographische Position oder einen geographischen Bereich des Hausgeräts bezogen. Die Wetterinformationen können einen aktuellen Parameter wie eine Tageszeit, eine Luftfeuchtigkeit, eine Temperatur, einen Luftdruck, eine Windrichtung, eine Windgeschwindigkeit oder einen Niederschlag in Art und/oder Menge umfassen. Ferner können die Wetterinformationen lokale Besonderheiten im Bereich des Hausgeräts berücksichtigen. Befindet sich das Hausgerät beispielsweise auf einem Berg, so können eine bevorzugte Windrichtung oder ein beschleunigter Wetterumschwung als lokale Gegebenheiten in die Bestimmung des Umgebungsparameters einbezogen werden.

In einer ersten Variante kann der Umgebungsparameter eine Umgebungstemperatur und in einer zweiten Variante die Gefahr eines Blitzschlags (Unwetterneigung) umfassen. In beiden Fällen kann durch das Deaktivieren des Hausgeräts ein potentieller Schaden abgewandt werden. In einer dritten Variante umfasst der Umgebungsparameter sowohl die Umgebungstemperatur als auch die Gefahr eines Blitzschlags (Unwetterneigung).

Es ist besonders bevorzugt, dass der Umgebungsparameter auf einen zukünftigen Zeitpunkt bezogen ist oder eine zukünftige Entwicklung des Umgebungsparameters bestimmt wird. Beispielsweise kann bestimmt werden, zu welchem Zeitpunkt der Umgebungsparameter den Schwellenwert voraussichtlich überschreitet. Das Hausgerät kann eine vorbestimmte Zeitspanne vor diesem Zeitpunkt deaktiviert werden. Betrifft der Umgebungsparameter etwa eine Außentemperatur, so kann beispielsweise bestimmt werden, dass mit Frostgefahr während bestimmter Nachtstunden zu rechnen ist. Das Hausgerät kann beispielsweise eine halbe Stunde vor dem Eintreten der Frostgefahr deaktiviert werden.

Im Folgenden wird davon ausgegangen, dass ein hoher Wert des Umgebungsparameters eine große Gefahr und ein niedriger Wert eine geringe Gefahr anzeigt, beispielsweise indem der Umgebungsparameter eine Blitzschlaggefahr oder eine Frostgefahr betrifft. Das Deaktivieren kann dann erfolgen, wenn der vorbestimmte Schwellenwert größer als der Schwellenwert wird. Umgekehrt kann der Umgebungsparameter aber auch durch einen niedrigen Wert eine hohe Gefahr anzeigen, beispielsweise wenn er eine Umgebungstemperatur betrifft. In diesem Fall kann das Deaktivieren erfolgen, wenn der Umgebungsparameter unter den vorbestimmten Schwellenwert absinkt.

Das Hausgerät kann wieder aktiviert werden, wenn der Umgebungsparameter den Schwellenwert in einer Gegenrichtung, also entgegen der vorbestimmten Richtung, überschreitet. Dabei kann eine Hysterese vorgesehen sein, um ein häufiges Aktivieren und Deaktivieren zu vermeiden. Beispielsweise kann das Hausgerät erst aktiviert werden, wenn der Umgebungsparameter um mehr als einen vorbestimmten Betrag vom Schwellenwert entfernt liegt oder über mindestens eine vorbestimmte Zeit jenseits des Schwellenwerts liegt. Außerdem kann das Aktivieren nur dann erfolgen, wenn sich ein geplanter Betriebslauf voraussichtlich nicht in einen Zeitbereich erstreckt, in welchem der Umgebungsparameter erneut den Schwellenwert überschreitet und so eine Betriebsgefahr anzeigt. Das Aktivieren kann ein Starten eines Betriebslaufs umfassen.

Das Hausgerät kann mit einem elektrischen Versorgungsnetz verbunden sein, wobei der Umgebungsparameter eine Wahrscheinlichkeit eines Blitzschlags betrifft und das Deaktivieren ein elektrisches Trennen des Hausgeräts vom Versorgungsnetz umfasst. Dabei kann der Umgebungsparameter auf einen vorbestimmten Bereich um das Hausgerät bezogen sein. Eine Überspannung, die sich am Hausgerät ergeben kann, nachdem der Blitz in das Versorgungsnetz eingeschlagen hat, kann verbessert verhindert werden. Der vorbestimmte Bereich kann abhängig von einer Topologie des Versorgungsnetzes, und insbesondere von eventuell installierten Blitzschutzmaßnahmen sein. Der Bereich kann sich beispielsweise über ein vorbestimmtes geographisches Gebiet erstrecken. Das Gebiet kann entlang des Versortungsnetzes bis zur nächsten Blitzschutzmaßnahme bestimmt sein. An Stelle einer Blitzschutzmaßnahme kann auch ein anderer Parameter verwendet werden, der die Gefahr einer sich über das Versorgungsnetz ausbreitenden Überspannung mindert, beispielsweise Geräte, welche einen Teil der Überspannung aufnehmen können.

Das Hausgerät kann mittels mehrerer elektrischer Verbindungen mit dem Versorgungsnetz verbunden sein, wobei bevorzugt wenigstens zwei der Verbindungen elektrisch getrennt werden. Im Gegensatz zu einem einseitigen Lösen der elektrischen Verbindung kann so ein verbesserter Blitzschutz bereitgestellt werden. Insbesondere kann vermieden werden, dass eine Überspannung von einer Verbindung des Versorgungsnetzes durch das Hausgerät gegen Erde abfließt und dabei einen hohen Fehlerstrom durch das Hausgerät bewirkt.

Optional sind mehrere Hausgeräte mit dem Versorgungsnetz verbunden, wobei eine elektrische Verbindung zwischen den mehreren Hausgeräten und dem Versorgungsnetz elektrisch getrennt wird. Beispielsweise kann ein kompletter Haushalt, in welchem das Hausgerät aufgestellt ist, vom Versorgungsnetz getrennt werden. Alternativ kann ein Teil eines Haushaltsnetzes vom Versorgungsnetz getrennt werden, beispielsweise ein Maschinennetz, mit welchem nur vorbestimmte Maschinen des Haushalts verbunden sind, oder ein Teilnetz, das beispielsweise auf ein Zimmer, einen Außenbereich oder eine Garage beschränkt ist. Dadurch kann einerseits eine Vielzahl Hausgeräte geschützt werden, andererseits kann zum Beispiel vermieden werden, dass ein Gerät deaktiviert wird, das der mit dem Umgebungsparameter verbundenen Gefahr nicht ausgesetzt ist.

Das Hausgerät ist in einem Außenbereich angebracht, wobei der Umgebungsparameter eine Außentemperatur umfasst. Insbesondere kann es sich bei dem Hausgerät um ein wasserführendes Hausgerät (wie z.B. eine Waschmaschine oder einen Geschirrspüler handeln) und/oder der Umgebungsparameter kann eine Frostgefahr reflektieren. Im Gebieten, in denen umbauter Wohnraum teuer ist, kann es üblich sein, ein wasserführendes Hausgerät wie beispielsweise einen Geschirrspüler oder eine Waschmaschine außerhalb des umbauten Bereichs in einem Außenbereich anzubringen, also beispielsweise auf einem Balkon, einem Dachgarten, einer Terrasse oder an einem Stellplatz für ein Kraftfahrzeug. An solchen Orten kann eine Frostgefahr in Abhängigkeit von einer Außentemperatur herrschen, wobei berücksichtigt werden kann, dass die Außentemperatur üblicherweise um einen vorbestimmten Betrag über der Umgebungstemperatur des Hausgeräts liegt, beispielsweise um ca. 2° - 4° C. Die Außentemperatur betrifft üblicherweise die Lufttemperatur im Schatten in einer Höhe von ca. zwei Metern über dem Untergrund und bevorzugt an einer Stelle, die durch Wärmestrahlung anderer Objekte möglichst unbeeinflusst ist.

Das Deaktivieren umfasst ein Anpassen einer Zeitsteuerung des Hausgeräts, um einen Betrieb des Hausgeräts zu verhindern, während der Umgebungsparameter auf einer vorbestimmten Seite des Schwellenwerts liegt.

In einer weiteren Ausführungsform kann das Deaktivieren einen vorangehenden Betriebslauf berücksichtigen, um einen abgebrochenen Betriebslauf zu vermeiden. Beispielsweise kann ein Betriebslauf verweigert werden, wenn er sich voraussichtlich bis in einen zeitlichen Bereich erstreckt, in welchem der Umgebungsparameter den Schwellenwert überschreitet. Alternativ kann auch der Beginn des Betriebslaufs auf einen Zeitpunkt nach der Frostgefahr verschoben werden. In einer weiteren Ausführungsform kann eine Sicherungsmaßnahme ergriffen werden, wenn das Ende eines Betriebslaufs in einen zeitlichen Bereich fällt, in welchem der Umgebungsparameter den Schwellenwert überschritten hat. Beispielsweise kann ein Geschirrspüler, der an einem Ort aufgestellt ist, an welchem Frostgefahr herrscht, nach dem Ende des Betriebslaufs von Wasser geleert werden oder das im Geschirrspüler befindliche Wasser kann während der Frostgefahr periodisch oder permanent umgewälzt oder geheizt werden.

Die meteorologische Lage wird von einer externen Informationsquelle bezogen. Beispielsweise können Wetterbeobachtungen oder eine Wetterprognose von einem externen Dienst bereitgestellt werden, der insbesondere über das Internet oder ein anderes Datennetz erreichbar sein kann. Alternativ können auch lokale Beobachtungen verwendet werden, um den Umgebungsparameter zu bestimmen oder vorherzusagen. Beispielsweise kann eine Umgebungstemperatur mit bescheidenem Aufwand zumindest in einem zeitlichen Bereich von unter einer Stunde mit ausreichender Sicherheit vorhergesagt werden.

Eine Steuervorrichtung für ein elektrisches Hausgerät umfasst eine Bestimmungsvorrichtung zur Bestimmung eines Umgebungsparameters, umfassend eine Außentemperatur, im Bereich des Hausgeräts auf der Basis einer meteorologischen Lage in diesem Bereich; eine Verarbeitungsvorrichtung zum Vergleichen des Umgebungsparameters mit einem vorbestimmten Schwellenwert; und eine Deaktivierungsvorrichtung zur Deaktivierung des Hausgeräts in Abhängigkeit des Vergleichsergebnisses. Die Steuervorrichtung kann Teil des Hausgeräts sein oder separat vorgesehen sein. Optional können mehrere Hausgeräte mittels nur einer Steuervorrichtung deaktiviert werden. Die Steuervorrichtung ist dafür eingerichtet, ein Hausgerät, das in einem Außenbereich angeordnet ist, zu steuern. Dabei kann es sich insbesondere um ein wasserführendes, elektrisches Hausgerät handeln. Dann ist die Verarbeitungsvorrichtung vorzugsweise dafür eingerichtet, eine Frostgefahr zu erkennen. Erfindungsgemäß ist die Steuervorrichtung dafür eingerichtet, die meteorologische Lage von einer externen Informationsquelle zu beziehen, wobei die meteorologische Lage Wetterinformationen umfasst. Die Deaktivierungsvorrichtung wiederum ist dafür eingerichtet, beim Deaktivieren ein Anpassen einer Zeitsteuerung des Hausgeräts vorzunehmen, um einen Betrieb des Hausgeräts zu verhindern, während der Umgebungsparameter auf einer vorbestimmten Seite des Schwellenwerts liegt.

Die Steuervorrichtung und insbesondere die Verarbeitungsvorrichtung können dazu eingerichtet sein, ein hierin beschriebenes Verfahren ganz oder teilweise auszuführen. Dazu kann die Verarbeitungsvorrichtung einen programmierbaren Mikrocomputer oder Mikrocontroller umfassen und das Verfahren kann zumindest teilweise als Computerprogrammprodukt mit Programmcodemitteln vorgesehen sein. Ein solcher Teil kann auch auf einem computerlesbaren Medium abgespeichert sein. Vorteile oder Merkmale des Verfahrens können auf die Steuervorrichtung bezogen werden und umgekehrt.

Die Bestimmungsvorrichtung kann mit der Verarbeitungsvorrichtung integriert ausgeführt sein. Die Steuervorrichtung oder die Bestimmungsvorrichtung können eine Schnittstelle zur Entgegennahme des Umgebungsparameters umfassen. Die Schnittstelle kann mit einem Sensor zur lokalen Beobachtung des Umgebungsparameters verbunden werden oder mit einem externen Dienst, der insbesondere in Abhängigkeit einer geographischen Position der Steuervorrichtung den Umgebungsparameter bereitstellen kann. Die Verarbeitung seitens der Steuervorrichtung kann dabei besonders einfach und ressourcenschonend erfolgen.

Die meteorologische Lage kann von extern an der Schnittstelle bereitgestellt werden, wobei die Verarbeitungsvorrichtung bevorzugt dazu eingerichtet ist, den Umgebungsparameter auf der Basis der meteorologischen Lage zu bestimmen. Dadurch kann eine lokale Bestimmung erfolgen, die gegebenenfalls besondere Gegebenheiten oder Methoden berücksichtigt.

Die Erfindung wird nun unter Bezug auf die beiliegenden Figuren genauer beschrieben, in denen:
- Figur 1: ein System mit einem Hausgerät in einem Haushalt; und
- Figur 2: ein Ablaufdiagramm eines Verfahrens zum Steuern eines Hausgeräts
darstellt.

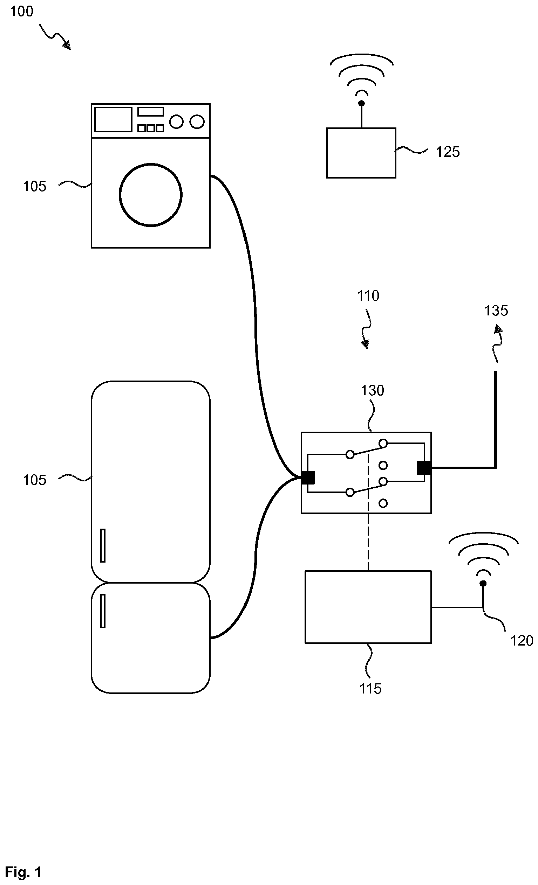

Figur 1 zeigt ein System 100 mit zwei exemplarischen Hausgeräten 105. Die Hausgeräte 105 sind in einem Haushalt aufgestellt und können beliebigen Zwecken dienen. Rein beispielhaft sind eine Waschmaschine und eine Kühl-Gefrier-Kombination dargestellt, in weiteren Ausführungsformen können jedoch auch andere Hausgeräte wie ein Geschirrspüler, eine Kochstelle, ein Backofen, eine Dunstabzugshaube, eine Kaffeemaschine, ein Toaster, ein Eierkocher oder ein anderes Hausgerät, insbesondere ein Koch- oder Küchengerät, umfasst sein.

Eine Steuervorrichtung 110 ist dazu eingerichtet, wenigstens eines der Hausgeräte 105 zu deaktivieren, wenn eine vorbestimmte Gefährdung vorliegt, die aus einer meteorologischen Lage im Bereich des Hausgeräts 105 oder der Steuervorrichtung 110 abgeleitet werden kann. Die Gefährdung kann beispielsweise eine Blitzschlaggefahr oder eine Frostgefahr betreffen. Die Steuervorrichtung 110 umfasst in der dargestellten Ausführungsform eine Verarbeitungsvorrichtung 115, die mit einer Schnittstelle 120 verbunden sein kann, über welche ein Umgebungsparameter im Bereich des Hausgeräts 105 oder eine dem Umgebungsparameter zu Grunde liegende meteorologische Lage entgegen genommen werden kann. Mit der Schnittstelle 120 kann ein lokaler Sensor zur Abtastung des Umgebungsparameters und/oder weiterer Umgebungsparameter oder ein entfernter Dienst 125 zur Bereitstellung des Umgebungsparameters oder der meteorologischen Lage verbunden sein. Der Dienst 125 kann insbesondere mittels eines drahtgebundenen oder drahtlosen Kommunikationsnetzwerks kommunikativ angebunden sein.

Die Verarbeitungsvorrichtung 115 kann dazu eingerichtet sein, über die Schnittstelle 120 entgegen genommene Informationen aufzubereiten, insbesondere um den Umgebungsparameter im Bereich des Hausgeräts 105 zu bestimmen, der ein Gefährdungspotenzial durch ein aktiviertes Hausgerät 105 reflektiert. Beispielsweise kann die Verarbeitungsvorrichtung 115 auf der Basis einer meteorologischen Lage im Bereich des Hausgeräts 105 oder einer Entwicklung des Umgebungsparameters eine Prognose für dessen weitere Entwicklung bereitstellen. Die Prognose kann aber auch vom Dienst 125 bereitgestellt werden.

Die Steuervorrichtung 110 umfasst ferner eine Deaktivierungsvorrichtung 130, die wie dargestellt elektrisch zwischen dem Hausgerät 105 und einer Energieversorgung 135 angebracht sei kann. Die Energieversorgung 135 kann beispielsweise einen lokalen Energiespeicher oder ein Versorgungsnetz für Energie umfassen. Alternativ kann die Deaktivierungsvorrichtung 130 auch dadurch gebildet sein, dass eine Steuerung des Hausgeräts 105 derart beeinflusst wird, dass ein Betrieb des Hausgeräts 105 eingestellt oder verhindert wird. Dazu kann die Verarbeitungsvorrichtung 115 mittels einer weiteren Schnittstelle mit einer weiteren Steuervorrichtung des Hausgeräts 105 kommunizieren, beispielsweise mittels einer weiteren Schnittstelle (nicht dargestellt).

Umfasst das Deaktivieren ein Trennen der Verbindung des Hausgeräts 105 zum Versorgungsnetz 135, so ist bevorzugt, dass eine mehrpolige Auftrennung erfolgt. Umfasst die Verbindung zum Versorgungsnetz beispielsweise L-, N- und PE-Leiter ("protective earth", Schutzerde), so können wenigstens zwei davon, insbesondere die beiden erstgenannten, aufgetrennt werden, um einen verbesserten Schutz des Hausgeräts 105 vor einer blitzschlagbedingten Überspannung im Versorgungsnetz 137 zu realisieren. Soll lediglich eine Funktionsunterbrechung bewirkt werden, so kann das Auftrennen einer einzigen Verbindung (in obigem Beispiel insbesondere der L- oder der N-Verbindung) bereits ausreichen, um einen Stromfluss durch das Hausgerät 105 zu verhindern.

Die Verarbeitungsvorrichtung 115 ist dazu eingerichtet, das Hausgerät 105 mittels der Deaktivierungseinrichtung 130 dann zu deaktivieren, wenn der oben beschriebene Umgebungsparameter einen vorbestimmten Schwellenwert übersteigt. Je nach Art des Parameters kann dabei ein positives Überschreiten (der Parameter wird größer als der Schwellenwert) oder ein negatives Überschreiten (der Parameter wird kleiner als der Schwellenwert) bestimmt werden. Bevorzugt bezieht sich der Umgebungsparameter auf eine geographische Position oder einen geographischen Bereich des Hausgeräts 105. Außerdem ist bevorzugt, dass sich der Umgebungsparameter auf einen zukünftigen Zeitpunkt, eine erwarteten Trend oder eine Prognose bezieht. Der Zeitpunkt des Deaktivierens, sowie gegebenenfalls eines späteren Aktivierens, kann mittels der Verarbeitungsvorrichtung auf der Basis des prognostizierten Umgebungsparameters bestimmt werden. So kann insbesondere sichergestellt werden, dass das Hausgerät 105 deaktiviert ist, während der Umgebungsparameter in einem als potentiell gefährlich eingestuften Wertebereich liegt.

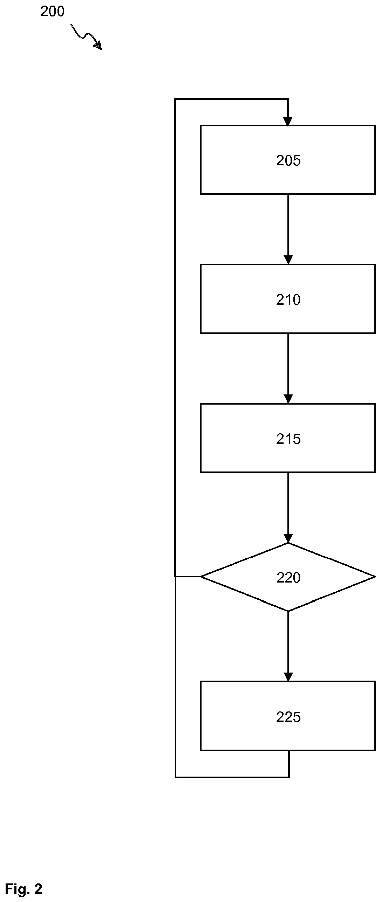

Figur 2 zeigt ein Ablaufdiagramm eines Verfahrens 200 zum Steuern eines Hausgeräts 105. Das Verfahren kann auf einem System 100, einer Steuervorrichtung 110 oder insbesondere einer Verarbeitungsvorrichtung 115 ablaufen.

In einem Schritt 205 wird eine meteorologische Lage im Bereich oder an der Position des Hausgeräts 105 bestimmt. Dieser Schritt kann seitens der Steuervorrichtung 110 oder seitens des Diensts 125 erbracht werden. Die Bestimmung kann eine Prognose umfassen. In einem Schritt 210 kann auf der Basis der meteorologischen Lage ein Umgebungsparameter an der Position oder im Bereich des Hausgeräts 105 oder der Steuervorrichtung 110 bestimmt werden. Die Bestimmung kann ebenfalls seitens der Steuervorrichtung 110 oder seitens des Diensts 125 erbracht werden. Es ist besonders bevorzugt, dass der Umgebungsparameter auf einen Trend, eine Entwicklung oder einen zukünftigen Zeitpunkt bezogen ist.

In einem Schritt 215 kann der Umgebungsparameter mit einem vorbestimmten Schwellenwert verglichen werden. Insbesondere im Fall eines Trends oder einer Entwicklung kann ein Zeitpunkt bestimmt werden, zu dem der Umgebungsparameter voraussichtlich den Schwellenwert überschreitet. In einem Schritt 220 kann bestimmt werden, ob ein Überschreiten vorliegt oder bevorsteht und gegebenenfalls zu welchem Zeitpunkt mit einem Überschreiten gerechnet werden kann. Liegt ein Überschreiten vor oder steht es bevor, beispielsweise indem eine Zeitspanne bis zu einem prognostizierten Überschreiten einen weiteren Schwellenwert unterschreitet, so kann das Hausgerät 105 in einem Schritt 225 deaktiviert werden. Das Deaktivieren kann auch verzögert werden, um sicherzustellen, dass ein bereits laufendes Betriebsprogramm vor dem Deaktivieren abgeschlossen werden kann. Das Deaktivieren kann auch vorgezogen werden, um ein bevorstehendes Betriebsprogramm, dessen Ausführungszeit voraussichtlich in einen Zeitabschnitt fallen würde, in welchem der Schwellenwert durch den Umgebungsparameter überschritten ist, zu verhindern oder zu verschieben. In einem solchen Fall kann beispielsweise eine verzögerte Ausführung vorgeschlagen werden, die voraussichtlich absolviert werden kann, ohne dass der Umgebungsparameter den Schwellenwert überschreitet.

Das Verfahren 200 kann zyklisch durchlaufen werden. Optional kann, nachdem das Hausgerät 105 deaktiviert wurde, auch ein Aktivieren bzw. Reaktivieren in Abhängigkeit des Umgebungsparameters bzw. seiner Prognose erfolgen. Dazu können die genannten Schritte in entsprechender Weise durchlaufen werden, mit dem Unterschied, dass im Schritt 225 ein Aktivieren erfolgt und im Schritt 220 eine Bestimmung bezüglich der Aktivierung statt der Deaktivierung.

### Bezugszeichen

- 100: System
- 105: Hausgerät
- 110: Steuervorrichtung
- 115: Verarbeitungsvorrichtung
- 120: Schnittstelle
- 125: Dienst
- 130: Deaktivierungsvorrichtung
- 135: Energieversorgung, Versorgungsnetz

- 200: Verfahren
- 205: Bestimmen meteorologische Lage
- 210: Bestimmen erwarteter Umgebungsparameter
- 215: Vergleichen mit Schwellenwert
- 220: Überschritten?
- 225: Deaktivieren / Aktivieren

## Patentansprüche

1. Verfahren (200) zum Steuern eines elektrischen Hausgeräts (105), das in einem Außenbereich angeordnet ist, wobei das Verfahren (200) folgende Schritte umfasst:
- Bestimmen (210) eines Umgebungsparameters umfassend eine Außentemperatur im Bereich des Hausgeräts (105) auf der Basis einer meteorologischen Lage in diesem Bereich, wobei die meteorologische Lage von einer externen Informationsquelle (125) bezogen wird und Wetterinformationen umfasst;
- Vergleichen (215) des Umgebungsparameters mit einem vorbestimmten Schwellenwert; und
- Deaktivieren (225) des Hausgeräts (105), falls der Umgebungsparameter den Schwellenwert in einer vorbestimmten Richtung überschreitet,
**dadurch gekennzeichnet, dass**
- das Deaktivieren ein Anpassen einer Zeitsteuerung des Hausgeräts (105) umfasst, um einen Betrieb des Hausgeräts (105) zu verhindern, während der Umgebungsparameter auf einer vorbestimmten Seite des Schwellenwerts liegt.

2. Verfahren (200) nach Anspruch 1, wobei bestimmt wird, zu welchem Zeitpunkt der Umgebungsparameter den Schwellenwert voraussichtlich überschreitet und wobei das Hausgerät (105) eine vorbestimmte Zeitspanne vor diesem Zeitpunkt deaktiviert wird.

3. Verfahren (200) nach Anspruch 1 oder 2, wobei das Hausgerät (105) wieder aktiviert wird, wenn der Umgebungsparameter den Schwellenwert in der Gegenrichtung überschreitet.

4. Verfahren (200) nach einem der vorangehenden Ansprüche, wobei das Hausgerät (105) mit einem elektrischen Versorgungsnetz (135) verbunden ist, der Umgebungsparameter eine Wahrscheinlichkeit eines Blitzschlags umfasst, und das Deaktivieren ein elektrisches Trennen des Hausgeräts (105) vom Versorgungsnetz (135) umfasst.

5. Verfahren (200) nach Anspruch 4, wobei der Umgebungsparameter auf einen vorbestimmten Bereich um das Hausgerät (105) bezogen ist.

6. Verfahren (200) nach Anspruch 4 oder 5, wobei das Hausgerät (105) mittels mehrerer elektrischer Verbindungen mit dem Versorgungsnetz (135) verbunden ist und wenigstens zwei der Verbindungen elektrisch getrennt werden.

7. Verfahren (200) nach einem der Ansprüche 4 bis 6, wobei mehrere Hausgeräte (105) mit dem Versorgungsnetz (135) verbunden sind und eine elektrische Verbindung zwischen den mehreren Hausgeräten (105) und dem Versorgungsnetz (135) elektrisch getrennt wird.

8. Verfahren (200) nach einem der vorangehenden Ansprüche, wobei das Hausgerät (105) ein wasserführendes Hausgerät ist und der Umgebungsparameter eine Frostgefahr reflektiert.

9. Steuervorrichtung (110) für ein elektrisches Hausgerät (105), wobei die Steuervorrichtung (110) dafür eingerichtet ist, ein Hausgerät (105), das in einem Außenbereich angeordnet ist, zu steuern und folgendes umfasst:
- eine Bestimmungsvorrichtung (115) zur Bestimmung eines Umgebungsparameters umfassend eine Außentemperatur im Bereich des Hausgeräts (105) auf der Basis einer meteorologischen Lage in diesem Bereich;
- eine Verarbeitungsvorrichtung (115) zum Vergleichen des Umgebungsparameters mit einem vorbestimmten Schwellenwert; und
- eine Deaktivierungsvorrichtung (130) zur Deaktivierung des Hausgeräts (105) in Abhängigkeit des Vergleichsergebnisses,
- wobei die Steuervorrichtung dafür eingerichtet ist, die meteorologische Lage von einer externen Informationsquelle (125) zu beziehen, und die meteorologische Lage Wetterinformationen umfasst;
**dadurch gekennzeichnet, dass**
- die Deaktivierungsvorrichtung (130) dafür eingerichtet ist, beim Deaktivieren ein Anpassen einer Zeitsteuerung des Hausgeräts (105) vorzunehmen, um einen Betrieb des Hausgeräts (105) zu verhindern, während der Umgebungsparameter auf einer vorbestimmten Seite des Schwellenwerts liegt.

10. Steuervorrichtung (110) nach Anspruch 9, wobei die Bestimmungsvorrichtung (115) eine Schnittstelle (120) zur Entgegennahme des Umgebungsparameters umfasst.

11. Steuervorrichtung (110) nach Anspruch 9, wobei die Bestimmungsvorrichtung (115) eine Schnittstelle (120) zur Entgegennahme der meteorologischen Lage umfasst und die Verarbeitungsvorrichtung (115) dazu eingerichtet ist, den Umgebungsparameter auf der Basis der meteorologischen Lage zu bestimmen.

12. Steuervorrichtung (110) nach einem der Ansprüche 9 bis 11, wobei die Steuervorrichtung (110) für ein wasserführendes, elektrisches Hausgerät (105) geeignet ist und die Verarbeitungsvorrichtung dafür eingerichtet ist, eine Frostgefahr zu erkennen.

## Claims

1. Method (200) for controlling an electrical household appliance (105), which is arranged in an outside area, wherein the method (200) comprises the following steps:
- determining (210) an environmental parameter comprising an outside temperature in the area of the household appliance (105) on the basis of a meteorological situation in this area, wherein the meteorological situation is obtained from an external information source (125) and comprises weather information;
- comparing (215) the environmental parameter with a predetermined threshold value; and
- deactivating (225) the household appliance (105) if the environmental parameter exceeds the threshold value in a predetermined direction,
**characterised in that**
- the deactivation comprises an adjustment of a time control of the household appliance (105) in order to prevent operation of the household appliance (105), while the environmental parameter lies on a predetermined side of the threshold value.

2. Method (200) according to claim 1, wherein it is determined at which point in time the environmental parameter is expected to exceed the threshold value and wherein the household appliance (105) is deactivated a predetermined time period before this point in time.

3. Method (200) according to claim 1 or 2, wherein the household appliance (105) is activated again when the environmental parameter exceeds the threshold value in the opposite direction.

4. Method (200) according to one of the preceding claims, wherein the household appliance (105) is connected to an electrical mains power supply (135), the environmental parameter comprises a probability of a lightning strike and the deactivation comprises an electrical separation of the household appliance (105) from the mains power supply (135).

5. Method (200) according to claim 4, wherein the environmental parameter is related to a predetermined area about the household appliance (105).

6. Method (200) according to claim 4 or 5, wherein the household appliance (105) is connected to the mains power supply (135) by means of a number of electrical connections and at least two of the connections are electrically separated.

7. Method (200) according to one of claims 4 to 6, wherein a number of household appliances (105) are connected to the mains power supply (135) and an electrical connection between the number of household appliances (105) and the mains power supply (135) is electrically separated.

8. Method (200) according to one of the preceding claims, wherein the household appliance (105) is a water-conducting household appliance and the environmental parameter reflects a risk of frost.

9. Control apparatus (110) for an electrical household appliance (105), wherein the control apparatus (110) is designed to control a household appliance (105), which is arranged in an outside area and comprises the following:
- a determination apparatus (115) for determining an environmental parameter comprising an outside temperature in the area of the household appliance (105) on the basis of a meteorological situation in this area;
- a processing apparatus (115) for comparing the environmental parameter with a predetermined threshold value; and
- a deactivation apparatus (130) for deactivating the household appliance (105) as a function of the comparison result,
- wherein the control apparatus is designed to obtain the meteorological situation from an external information source (125) and the meteorological situation comprises weather information;
**characterised in that**
- the deactivation apparatus (130) is designed to perform an adjustment of a time control of the household appliance (105) upon deactivation in order to prevent operation of the household appliance (105), while the environmental parameter lies on a predetermined side of the threshold value.

10. Control apparatus (110) according to claim 9, wherein the determination apparatus (115) comprises an interface (120) for accepting the environmental parameter.

11. Control apparatus (110) according to claim 9, wherein the determination apparatus (115) comprises an interface (120) for accepting the meteorological situation and the processing apparatus (115) is designed to determine the environmental parameter on the basis of the meteorological situation.

12. Control apparatus (110) according to one of claims 9 to 11, wherein the control apparatus (110) is suited to a water-conducting, electrical household appliance (105), and the processing facility is designed to identify a risk of frost.

## Revendications

1. Procédé (200) de commande d'un appareil ménager électrique (105), lequel est disposé à l'extérieur, dans lequel le procédé (200) comprend les étapes suivantes :
- détermination (210) d'un paramètre relatif au milieu environnant comprenant une température extérieure dans la zone de l'appareil ménager (105) sur base d'une situation météorologique dans cette zone, la situation météorologique se référant à une source d'informations externe (125) et aux informations sur le temps qu'il fait ;
- comparaison (215) du paramètre relatif au milieu environnant avec une valeur de seuil prédéterminée ; et
- désactivation (225) de l'appareil ménager (105), si le paramètre relatif au milieu environnant dépasse la valeur de seuil dans un sens prédéterminé,
**caractérisé en ce que**
- la désactivation comprend une adaptation d'une commande relative au temps de l'appareil ménager (105) pour empêcher le fonctionnement de l'appareil ménager (105), tant que le paramètre relatif au milieu environnant reste d'un côté prédéterminé de la valeur de seuil.

2. Procédé (200) selon la revendication 1, dans lequel il est déterminé à quel moment le paramètre relatif au milieu environnant est susceptible de dépasser la valeur de seuil et dans lequel l'appareil ménager (105) est désactivé un certain lapse de temps prédéterminé avant ce moment.

3. Procédé (200) selon la revendication 1 ou 2, dans lequel l'appareil ménager (105) est à nouveau activé quand le paramètre relatif au milieu environnant dépasse la valeur de seuil dans le sens opposé.

4. Procédé (200) selon l'une des revendications précédentes, dans lequel l'appareil ménager (105) est raccordé à un réseau d'alimentation électrique (135), le paramètre relatif au milieu environnant comprend la possibilité d'un coup de foudre et la désactivation comprend la déconnexion électrique de l'appareil ménager (105) du réseau d'alimentation.

5. Procédé (200) selon la revendication 4, dans lequel le paramètre relatif au milieu environnant se réfère à une zone prédéterminée autour de l'appareil ménager (105).

6. Procédé (200) selon la revendication 4 ou 5, dans lequel l'appareil ménager (105) est raccordé au moyen de plusieurs liaisons électriques au réseau d'alimentation (135) et au moins deux des liaisons sont électriquement déconnectées.

7. Procédé (200) selon l'une des revendications 4 à 6, dans lequel plusieurs appareils ménagers (105) sont raccordés au réseau d'alimentation (135) et une liaison électrique entre les plusieurs appareils ménagers (105) et le réseau d'alimentation (135) est électriquement déconnectée.

8. Procédé (200) selon l'une des revendications précédentes, dans lequel l'appareil ménager (105) est un appareil ménager à circulation d'eau et le paramètre relatif au milieu environnant concerne le risque de gel.

9. Dispositif de commande (110) pour un appareil ménager électrique (105), dans lequel le dispositif de commande (110) est configuré pour commander un appareil ménager (105) disposé à l'extérieur et comprend les suivants :
- un dispositif de détermination (115) pour la détermination (115) d'un paramètre relatif au milieu environnant comprenant une température extérieure dans la zone de l'appareil ménager (105) sur base d'une situation météorologique dans cette zone ;
- un dispositif de traitement (115) pour la comparaison du paramètre relatif au milieu environnant avec une valeur de seuil prédéterminée ; et
- un dispositif de désactivation (130) pour la désactivation de l'appareil ménager (105) en fonction du résultat de comparaison,
- le dispositif de commande étant configuré pour que la situation météorologique se réfère à une source d'information externe (125) et la situation météorologique comprend des informations sur le temps qu'il fait ;
**caractérisé en ce que**
- le dispositif de désactivation (130) est configuré pour en cas de désactivation opérer une adaptation de la commande relative au temps de l'appareil ménager (105) pour empêcher un fonctionnement de l'appareil ménager (105) tant que le paramètre du milieu environnant se trouve d'un côté prédéterminé de la valeur de seuil.

10. Dispositif de commande (110) selon la revendication 9, dans lequel le dispositif de détermination (115) comprend une interface (120) pour la réception du paramètre relatif au milieu environnant.

11. Dispositif de commande (110) selon la revendication 9, dans lequel le dispositif de détermination (115) comprend une interface (120) pour la réception de la situation météorologique et le dispositif de traitement (115) est configuré pour déterminer le paramètre relatif au milieu environnant sur base de la situation météorologique.

12. Dispositif de commande (110) selon l'une des revendications 9 à 11, dans lequel le dispositif de commande (110) convient à un appareil ménager électrique (105) à circulation d'eau et le dispositif de traitement est configuré pour reconnaître un risque de gel.
